# FASCICULE DE BREVET EUROPEEN

(11) **EP 3 221 144 B1**
(45) Date de publication et mention de la délivrance du brevet: **24.03.2021**
(21) Numéro de dépôt: 15817446.6
(22) Date de dépôt: 23.11.2015
(51) Int. Cl.: B32B 17/10, C03C 27/12, F21V 33/00, B60K 35/00, B60Q 3/78

(54) **VITRAGE DE SIGNALISATION LUMINEUSE, VEHICULE L'INCORPORANT ET FABRICATION**
VERGLASUNG MIT LEUCHTANZEIGE, FAHRZEUG DIESE BEINHALTEND UND HERSTELLUNG
LIGHT-SIGNALLING GLASS PANEL, VEHICLE INCLUDING SAME AND MANUFACTURE

(30) Priorité: 21.11.2014 FR 1461308
(43) Date de publication de la demande: 27.09.2017
(73) Titulaire: SAINT-GOBAIN GLASS FRANCE, 92400 Courbevoie (FR)
(72) Inventeur: BAUERLE, Pascal, 80700 Roye (FR)
(74) Mandataire: Saint-Gobain Recherche
(86) Numéro de dépôt international: PCT/FR2015/053171
(87) Numéro de publication internationale: WO 2016/079459

(56) Documents cités:
- WO-A1-2012/028820
- WO-A1-2014/020249
- DE-A1-102013 003 686
- FR-A1- 2 986 854
- US-A1- 2005 238 857
- US-A1- 2010 060 821

## Description

L'invention concerne un vitrage de signalisation lumineuse ainsi qu'un véhicule comportant un tel vitrage et la fabrication d'un tel vitrage.

Les pare brises intègrent de plus en plus des affichages à tête haute ('HUD' en anglais).

Le document DE102013003686 décrit un vitrage feuilleté lumineux formant pare brise ou lunette arrière de véhicule automobile intégrant des diodes sur une carte à circuit imprimé (PCB pour 'printed circuit board' en anglais) pour délivrer des signaux lumineux d'alerte au conducteur.

Plus précisément dans le mode de réalisation en relation avec la figure 2 de ce document, le pare-brise de signalisation lumineuse comprenant :
- un vitrage feuilleté comportant :
   - un premier vitrage formant vitrage extérieur avec des première et deuxième faces principales
   - un intercalaire de feuilletage
   - un deuxième vitrage formant vitrage intérieur avec des troisième et quatrième faces principales,
   les deuxième et troisième faces étant les faces internes du vitrage
- un ensemble de diodes sur une carte à circuit imprimé aptes à émettre une lumière de signalisation, rouge, d'avertissement au conducteur
- chaque diode ayant une face émettrice émettant en direction du verre intérieur,
- l'intercalaire de feuilletage ayant une ouverture traversante ménagée tout autour de la carte PCB pour son intégration.

Le taux de rebut de ce vitrage peut être amélioré et par la même le cout de fabrication réduit.

A cet effet, la présente demande a pour premier objet un vitrage de signalisation lumineuse pour pare-brise de véhicule comprenant :
- un vitrage feuilleté comportant :
   - un premier vitrage, en verre minéral, éventuellement clair, extraclair ou teinté notamment gris ou vert, de préférence bombé, formant vitrage extérieur, avec des première et deuxième faces principales respectivement dites face F1 et face F2, d'épaisseur de préférence d'au plus 2,5mm, même d'au plus 2mm - notamment 1,9mm, 1,8mm, 1,6mm et 1,4mm- ou même d'au plus1,3mm ou d'au plus 1mm

   - un intercalaire de feuilletage, éventuellement clair, extraclair ou teinté notamment gris ou vert, en matière polymérique de préférence thermoplastique et mieux encore en polyvinylbutyral (PVB), d'épaisseur e1 d'au plus 1,8mm, mieux d'au plus 1,2mm et même d'au plus 0,9mm (et mieux d'au moins 0,38mm et même d'au moins 0,7mm), notamment en retrait du chant du premier vitrage d'au plus 2mm et en retrait du chant d'un deuxième vitrage d'au plus 2mm
   - un deuxième vitrage, en verre minéral, de préférence bombé et de préférence clair ou extraclair voire teinté, formant vitrage intérieur, avec des troisième et quatrième faces principales respectivement face F3 et face F4, d'épaisseur de préférence inférieure à celle du premier vitrage, même d'au plus 2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm
   la face F2 et la face F3 étant les faces internes du vitrage feuilleté
- un ensemble de diodes électroluminescentes inorganiques sur une face dite avant, en regard de la face F3 d'une carte à circuit imprimé dite carte PCB, aptes à émettre une lumière de signalisation, chaque diode ayant une face émettrice apte à émettre en direction du vitrage intérieur, et chaque diode ayant une tranche, l'ensemble carte PCB et diodes étant d'épaisseur totale et2, les diodes étant d'épaisseur e2 et la carte PCB étant d'épaisseur e'2 et et2≤e1 l'intercalaire de feuilletage ayant une ouverture traversante
Et, selon l'invention, pour chacune des diodes, l'intercalaire de feuilletage comprend une ouverture traversante entourant la tranche de la diode, et notamment dans l'espace dit interdiodes entre diodes voisines, l'intercalaire de feuilletage est entre la face F3 et la face avant de la carte PCB, , l'intercalaire de feuilletage étant entre la face F3 et la face avant de la carte PCB sur toute la face avant du PCB hors diodes.

La découpe totale tout autour du PCB comme pratiqué dans l'art antérieur augmente le risque de mauvais assemblage (bulles, délamination, défauts esthétiques). Aussi, la présente invention propose des découpes locales de l'intercalaire de feuilletage. Par ailleurs, les diodes ne sont pas en surépaisseur par rapport à l'intercalaire pour ne pas fragiliser le verre.

De manière similaire, la présente demande a pour deuxième objet un vitrage de signalisation de véhicule choisi parmi une lunette arrière et une vitre latérale comprenant :
- un vitrage feuilleté comportant :
   - un premier vitrage, en verre minéral, notamment bombé éventuellement clair, extraclair ou teinté notamment gris ou vert, formant vitrage extérieur, avec des première et deuxième faces principales respectivement dites face F1 et face F2, d'épaisseur de préférence d'au plus 2,5mm, même d'au plus 2mm - notamment 1,9mm, 1,8mm, 1,6mm et 1,4mm- ou même d'au plus1,3mm ou d'au plus 1mm
   - un intercalaire de feuilletage, éventuellement clair, extraclair ou teinté notamment gris ou vert, en matière polymérique de préférence thermoplastique et mieux encore en PVB, d'épaisseur e1 d'au plus 1,8mm, mieux d'au plus 1,2mm et même d'au plus 0,9mm (et mieux d'au moins 0,38mm et même d'au moins 0,7mm), notamment en retrait du chant du premier vitrage d'au plus 2mm et en retrait du chant d'un deuxième vitrage d'au plus 2mm
   - un deuxième vitrage, en verre minéral, notamment bombé, éventuellement clair, extraclair voire teinté notamment gris ou vert formant vitrage intérieur, avec des troisième et quatrième faces principales respectivement face F3 et face F4, d'épaisseur de préférence inférieure à celle du premier vitrage, même d'au plus 2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm la face F2 et la face F3 étant les faces internes du vitrage feuilleté
- un ensemble de diodes électroluminescentes inorganiques sur une face dite avant, en regard de la face F2 d'une carte à circuit imprimé dit carte PCB, aptes à émettre une lumière de signalisation, chaque diode ayant une face émettrice (d'une puce semi-conductrice) apte à émettre en direction du vitrage extérieur, et chaque diode ayant une tranche, l'ensemble carte PCB et diodes étant d'épaisseur totale et2, les diodes étant d'épaisseur e2 et la carte PCB étant d'épaisseur e'2 et et2≤e1,
l'intercalaire de feuilletage ayant une ouverture traversante
Et, selon l'invention, pour chacune des diodes, l'intercalaire de feuilletage comprend une ouverture traversante entourant la tranche de la diode, et notamment dans l'espace dit interdiodes, entre diodes voisines, l'intercalaire de feuilletage étant entre la face F2 et la face avant de la carte PCB,, l'intercalaire de feuilletage étant entre la face F2 et la face avant de la carte PCB sur toute la face avant du PCB hors diodes.

Par vitre latérale selon l'invention entend aussi custode.

L'intercalaire de feuilletage est de préférence au plus près des diodes et de préférence en tenant de la tolérance de positionnement des diodes lors de la découpe choisie de préférence plus large que la largeur des diodes (même si l'intercalaire a de la souplesse), Dans un mode de réalisation préféré l'intercalaire de feuilletage est espacé d'au plus 0,5mm mieux d'au plus 0,2mm voire 0,1mm de la tranche des diodes et même est en contact avec la tranche des diodes.

Dans un mode de réalisation préféré, e1 est subcentimétrique, de préférence entre 0,7 et 0,9mm (en particulier 0,76mm pour le PVB classique et par exemple 0,81mm pour le PVB acoustique), et de préférence e1-et2<0,5mm et même de préférence e1-et2 allant de 0,1 à 0,3mm. e1 est naturellement l'épaisseur entre la face F2 et la face F3.

En particulier, dans un mode de réalisation, l'intercalaire de feuilletage est formé à partir d'un feuillet unique (clair, extraclair ou teinté), de préférence PVB, avec les ouvertures traversantes, et la face arrière et contre ou collée à la face F2 du pare-brise ou à la face F3 de la lunette arrière ou de la vitre latérale.

Dans un autre mode de réalisation, l'intercalaire de feuilletage, de préférence PVB, peut être également présent entre la face arrière de la carte PCB et la face F2 du pare-brise ou entre la face arrière de la carte PCB et la face F3 de la lunette arrière ou de la vitre latérale, on définit l'épaisseur e'1 entre la face arrière et la face F2 du pare-brise ou entre la face arrière de la carte PCB et la face F3 de la lunette arrière ou de la vitre latérale. On préfère que et2≤e1-e'1 (en plus de et2≤e1). On rajoute un feuillet (qui peut être plus mince d'épaisseur e'1 par exemple d'au plus 0,38mm et même d'au plus 0,2mm, notamment clair, extraclair ou teinté) côté face arrière de la carte PCB. Ce feuillet est de préférence de même étendue que le feuillet avec les ouvertures.

L'intercalaire peut être en surépaisseur la plus faible possible (par rapport aux diodes) pour ne pas risquer de générer trop de bulles d'air.

On peut préfèrer utiliser une unique feuille (de PVB) pour l'intercalaire pour des raisons économiques (cout matière et simplement une série de découpes locales à faire).

L'usage d'une seule feuille (de PVB) de préférence d'épaisseur standard 0,78mm ou 0,81mm (pour davantage de sécurité plutôt que 0,38mm) est rendue possible par le choix de nouvelles diodes de puissance ultraminces, très récemment disponibles sur le marché.

Comme précité, on peut utiliser deux (ou plusieurs) feuillets (de préférence de PVB) comme indiqué pour un renfort mécanique. Par exemple :
- un feuillet avec les ouvertures traversantes d'épaisseur d'au plus 0,4mm, notamment de 0,38mm
- un autre feuillet d'épaisseur e'1 d'au plus 0,4mm, notamment de 0,38mm, et même d'au plus 0,2mm, notamment de 0,19mm
   Si les diodes (et la carte PCB) sont suffisamment minces on peut même inverser. Par exemple
- un feuillet (de préférence de PVB) avec les ouvertures traversantes d'épaisseur d'au plus 0,4mm notamment de 0,38mm et même d'au plus 0,2mm, notamment de 0,19mm
un autre feuillet (de préférence de PVB) d'épaisseur d'au plus 0,4mm, notamment de 0,38mm.Dans un mode de réalisation préféré, chaque diode, de préférence de puissance, étant un composant électronique incluant une puce semi-conductrice, et est équipée d'une enveloppe périphérique, polymérique ou céramique, encapsulant la tranche du composant électronique (et définissant la tranche de la diode), débordant sur la face avant du composant en entourant la puce semi-conductrice, l'intercalaire de feuilletage (par fluage lors du feuilletage) s'étend jusqu'à être entre ladite surface avant de l'enveloppe et la face F3 du pare-brise ou la face F2 de la vitre latérale ou de la lunette arrière.

L'enveloppe peut correspondre à l'épaisseur maximale (hauteur) de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

La diode peut être dénuée d'élément optique (lentille etc) au-dessus de la puce-semi conductrice pour faciliter une compacité ; toutefois l'élément optique peut être suffisamment petit pour être intégrée dans le vitrage feuilleté. La diode peut comprendre une résine de protection ou une matière à fonction de conversion de couleur, classiquement sur la puce semi-conductrice. La puce-semiconductrice peut être noyée dans une matière (résine etc).

Au moment de la mise en contact de l'intercalaire de feuilletage et de la carte PCB, l'intercalaire de feuilletage peut être espacé d'au plus 0,5mm mieux d'au plus 0,1mm et après feuilletage, du fait du fluage l'intercalaire de feuilletage peut moins espacé et même en contact avec la tranche et même déborder sur la face avant du composant en entourant la puce semi-conductrice.

De préférence les diodes sont des composants montés en surface sur la face avant de la carte PCB et même les diodes ont une émission lambertienne ou quasi lambertienne.

Dans un mode de réalisation préféré, l'intercalaire de feuilletage est en PVB, e1 allant de 0,7 à 0,9mm et même le cas échéant e'1 d'au plus 0,4mm, et les diodes sont des composants montés en surface sur la face avant de la carte PCB, e'2 est d'au plus 0,2mm mieux d'au plus 0,15mm et même d'au plus 0,05mm.

La largeur de la carte PCB est de préférence d'au plus 5cm, mieux d'au plus 2cm, et même d'au plus 1cm. La largeur (ou longueur) d'une diode avec une seule puce semi conductrice, généralement diode de forme carrée, est de préférence d'au plus 5mm. La longueur d'une diode avec une pluralité des puces semi- conductrices (typiquement entourées par l'enveloppe), généralement de forme rectangulaire, est de préférence d'au plus 20mm mieux d'au plus 10mm.

La carte PCB (de préférence suffisamment souple pour s'adapter au vitrage feuilleté bombé) peut être collée ou plaquée contre la face F2 pour le pare-brise ou la face F3 pour la lunette arrière ou le vitrage latéral, collage par un adhésif (colle ou de préférence adhésif double face), d'épaisseur e3 avec e3≤0,1mm, mieux e3≤0,05mm -même tel que e3+e'2 est d'au plus 0,15mm mieux d'au plus 0,1mm-. Avec cet adhésif on préfère e3+et2≤e1 (surtout si présent en face arrière du PCB dans la zone des diodes).

Le collage est sur toute la longueur ou ponctuel, dans zone à diodes et/ou hors diodes.

Les diodes sont de préférence des diodes de puissances qui sont en fonctionnement sous alimentées électriquement en courant, de préférence avec un facteur d'au moins 10 et même d'au moins 20 (donc intensité /10 voire intensité/20) notamment de façon à maintenir une température inférieure à la température de ramollissement du matériau polymérique de l'intercalaire de feuilletage, en particulier d'au plus 130°C, mieux d'au plus 120°C et même d'au plus 100°C.

Ces diodes garantissent une excellente efficacité sans trop chauffer.

Par exemple pour des diodes alimentées en courant à 1A on choisit entre 50 et 100mA.

Les diodes inorganiques sont par exemple à base de phosphure de gallium, de nitrure de gallium, de gallium et d'aluminium.

La carte PCB peut être suffisamment souple (flexible) pour s'adapter aux courbures du vitrage feuilleté bombé.

Dans un mode de réalisation, la carte PCB comporte un film en matière plastique de préférence transparent, de préférence en poly(éthylène téréphtalate) ou PET ou en polyimide, pourvue de pistes conductrices, notamment métalliques ou en oxyde conducteur transparent, de préférence transparentes et équipée des diodes montées en surface. Les pistes conductrices sont imprimées ou déposées par toute autre méthode de dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3 pour le pare-brise en face F2 pour le vitrage latéral ou la lunette arrière. Les pistes conductrices peuvent être transparentes de par la matière transparente ou par leur largeur suffisamment fine pour être (quasi) invisibles.

Des films de polyimide ont une meilleure tenue en la température plus élevée par rapport à l'alternative PET ou même PEN (poly(naphtalate d'éthylène).

De préférence, la carte PCB s'étend au moins jusqu'à la tranche du vitrage feuilleté, et de préférence dépasse de la tranche, de préférence en forme coudée mieux en L, et entre la face arrière de la carte PCB et la face F2 du pare-brise ou la face F3 de la lunette arrière ou de la vitre latérale, est logé un adhésif étanche à l'eau liquide d'épaisseur d'au plus 0,1mm et mieux d'au plus 0,05mm, notamment un adhésif double face. On préfère un tel adhésif à une solution de surmoulage. Il peut s'agir de l'adhésif de préférence transparent utilisé pour fixer (toute) la carte PCB.

La carte PCB coudée notamment en forme de L peut comporter une première partie (rectangulaire) porteuse des diodes (avec le coude) et une deuxième partie pour la connectique (rectangulaire) débouchant et même dépassant sur la tranche du vitrage feuilleté. Cette deuxième partie peut être (beaucoup) plus longue que la première partie.

Le vitrage (pare-brise, lunette arrière, vitrage latérale) peut comporter plusieurs signalisations lumineuses avec la même fonction ou des fonctions distinctes.

Pour avoir une surface de signalisation plus grande et/ou des couleurs différentes on peut avoir sur une même carte PCB plusieurs rangées de diodes ou encore accoler deux cartes PCB (au moins accoler les zones des PCB avec diodes).

Sur une carte PCB donnée, les diodes peuvent émettre la même lumière ou une lumière de couleurs différente, de préférence pas en même temps.

Classiquement, les diodes sont en (au moins) une rangée formant une bande lumineuse le long d'un bord longitudinal ou latéral du pare-brise (côté conducteur) ou de la lunette arrière ou de la vitre latérale.

Naturellement, l'intercalaire de feuilletage peut être en contact direct avec la face F3 (respectivement F2) ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

La carte PCB peut être dans le clair de vitre, espacée ou non des bords opaques (cadre émaillé en général). Par exemple on dispose la carte PCB le long d'un bord latéral ou longitudinal ou encore plus central notamment sensiblement à mi-chemin des bords latéraux et même plus proche du bord longitudinal inférieur (en position monté) que du bord longitudinal supérieur. Le plus souvent, il y a une couche opaque en face F2 et une couche opaque en face F4 voire F3. Leurs largeurs sont identiques ou distinctes.

La carte PCB (au moins la zone avec les diodes ou au moins la zone sans les diodes si PCB coudé notamment en L) peut être agencée dans ou au voisinage de la région d'une couche opaque, notamment un émail (noir), le long d'un bord périphérique du vitrage feuilleté, généralement en face F2 et/ou face F4 ou encore en face F2 et/ou en face F3.

Dans un premier mode de réalisation, la carte PCB peut même être disposée dans une région du pare-brise dans laquelle le verre extérieur est entièrement (ou partiellement) opaque par la couche opaque (la plus externe) comme un émail (noir) de préférence en F2. Cette couche opaque peut être dans cette région du pare-brise une couche pleine (fond continu) ou une couche avec des ouvertures (surfaces sans couche opaque) par exemple couche sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, les diodes voire toute la carte PCB peut être visible uniquement à l'intérieur, pour afficher les informations - comme un avertissement (anti collisions) à un conducteur ou même à toute autre personne - sans limiter la vue du conducteur à travers le pare-brise.

La carte PCB peut être disposée dans une région du pare-brise dans laquelle le verre intérieur est opaque par une couche opaque (la plus interne) comme un émail (noir) de préférence en F4 voire en F3. Cette couche opaque comporte alors au moins des ouvertures (par un masque au dépôt ou par retrait notamment laser) au droit des diodes. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes. Dans ces zones on peut ajouter une couche diffusante comme un émail blanc en face F4 voire en F3. La couche diffusante peut être espacée ou jointive avec cette couche opaque (la plus interne). De préférence, le pare-brise comporte en plus la couche opaque en face F2.

La carte PCB peut être disposée dans une région de la lunette arrière ou de la vitre latérale dans laquelle le verre intérieur est opaque par la couche opaque (la plus interne) de préférence en F4 voire en F3. Dans ce mode de réalisation, les diodes voire toute la carte PCB est visible uniquement à l'extérieur, pour former toute sorte de feu ou information. Cette couche opaque peut être dans cette région de la lunette arrière ou de la vitre latérale une couche pleine (fond continu) ou une couche avec des ouvertures (surfaces sans couche opaque) par exemple couche sous forme d'un ensemble de motifs géométriques (en rond, rectangle, carré etc),ou non, de taille identiques ou distinctes (de taille de plus ou plus petite et/ou motifs de plus ou plus espacés en s'éloignant de la tranche) en particulier un émail. De préférence, la lunette arrière ou la vitre latérale comporte en plus la couche opaque en face F4 voire F3.

La carte PCB peut être disposée dans une région de la lunette arrière ou de la vitre latérale dans laquelle le verre extérieur est opaque par une couche opaque (la plus externe) comme un émail (noir) de préférence en F2. Cette couche opaque comporte alors au moins des ouvertures (par un masque au dépôt ou par retrait notamment laser) au droit des diodes. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes. Dans ces zones on peut ajouter une couche diffusante comme un émail blanc en face F2. La couche diffusante peut être espacée ou jointive avec cette couche opaque. De préférence, la lunette arrière ou la vitre latérale comporte en plus la couche opaque en face F4 (ou F3).

Pour un confort visuel ou pour former une signalétique plus homogène, le pare-brise peut comporter sur la face F3 ou (mieux) la face F4 en regard des diodes une couche diffusante, de préférence blanche, en particulier un émail (blanc). Pour un confort visuel notamment, le vitrage latéral ou la lunette arrière peut comporter en regard des diodes une couche diffusante sur la face F2 (voire F1), de préférence blanche en particulier un émail (blanc). On peut avoir un ensemble de motifs diffusants (blancs) de la taille des diodes ou encore une couche diffusante formant une signalétique dont un pictogramme.

La couche diffusante peut être dans une zone du clair de vitre ou comme déjà indiquée dans une zone périphérique avec une couche opaque, telle que l'émail noir, avec des ouvertures au droit des diodes.

En particulier, pour la lunette arrière ou la vitre latérale, les diodes peuvent être arrangées pour former une ou des lettres, un symbole (triangle, symbole de panne ou de danger etc), une flèche, en utilisant une ou plusieurs cartes PCB...

En particulier, pour le pare-brise, les diodes peuvent être arrangées pour former une ou des lettres, un symbole (triangle, symbole de panne ou de danger etc), une ou des flèches (gauche et droite indicatrices du clignotant), en utilisant une ou plusieurs cartes PCB. On peut avoir autant de carte PCB et ensemble de diodes tel que décrit précement que nécessaire. Par exemple :
- un premier ensemble le long d'un bord latéral gauche de préférence plus près du bord longitudinal bas que haut,
- un deuxième ensemble le long d'un bord latéral droit de préférence plus près du bord longitudinal bas que haut,
- un troisième ensemble le long du bord longitudinal bas de préférence côté conducteur,
- un quatrième ensemble au centre de préférence plus près du bord longitudinal bas que haut

On peut changer de couleur en fonction du degré de sécurité ou encore allumer plus ou moins de diodes en fonction du degré de sécurité.

L'invention concerne bien entendu tout véhicule comportant au moins un vitrage de signalisation lumineuse tel que décrit précédemment et en particulier :
- le vitrage de signalisation lumineuse formant pare-brise est un moyen anti collision (sur (auto)route ou même en ville) notamment par détection d'une distance à la voiture (ou tout autre moyen de locomotion tel que moto, vélo, trottinette etc ou encore un animal) de devant (ou d'un objet ou d'une personne comme un piéton) trop courte, ou encore par détection d'une distance trop courte d'un objet ou d'une personne ou d'une voiture ou tout autre moyen de locomotion (vélo, moto etc) sur le côté de la voiture, côté gauche ou côté droit, et allumage des diodes de préférence en rouge ou, plus progressivement, en orange (ambre) puis en rouge, ou même avec trois ou plus niveaux donc couleurs
- ou le vitrage de signalisation lumineuse formant la lunette arrière est un vitrage incluant un feu stop (par exemple au moins 60cd), un troisième feu stop (par exemple entre 25 et 80cd), un clignotant (par exemple au moins 50cd), un feu de détresse ou un feu de repérage du véhicule
- le vitrage de signalisation lumineuse formant vitrage latérale est un vitrage incluant un feu de détresse (en situation de panne etc) ou un feu de repérage du véhicule (à l'arrêt, sur un parking, en ville etc) un répétiteur de clignotant (vitrage latérale avant -notamment proche du rétroviseur- pour être vu quand le véhicule est doublé, par exemple entre 0,6 et 20cd).

On peut aussi former feux de gabarit, feux de stationnement, feux de position latéraux.

Comme diodes on peut citer la gamme des OSLON BLACK FLAT vendue par OSRAM. Pour la lumière rouge, on peut citer comme diode vendue par OSRAM : OSLON BLACK FLAT Lx H9PP. Pour la lumière orange (ambre), on peut citer comme diode vendue par OSRAM : LCY H9PP. Pour la lumière blanche on peut citer comme diode vendue par OSRAM : LUW H9QP ou KW HxL531.TE où x = est nombre de puces dans la diode (par exemple 4 ou 5).

Comme PCB flexible on peut citer la gamme des produits AKAFLEX® (notamment PCL FW) de la société KREMPEL.

Dans un mode de réalisation du véhicule, il comporte au moins une unité de commande pour piloter les diodes et même au moins un capteur notamment pour détecter les situations dangereuses. Une unité de commande pour piloter les diodes peut être dans le vitrage feuilleté, sur ou en dehors de la carte PCB.

L'invention concerne enfin un procédé du vitrage de signalisation lumineuse tel que décrit précédemment qu'il comporte les étapes suivantes:
- découpe automatique (robotisé) de l'intercalaire de feuilletage sous forme d'une unique feuille (de PVB de préférence) de préférence d'au plus 0,9mm et même d'au plus 0,4mm pour former des ouvertures traversantes locales (géométrique : rondes, carrés, rectangulaires, notamment de la même forme que les diodes), de préférence autant (et pas plus) d'ouvertures que des diodes ou l'intercalaire de feuilletage (de PVB de préférence) comportant une première feuille et une deuxième feuille notamment d'au plus 0,4mm et même d'au plus 0,2mm, découpe automatique de la première feuille d'au plus 0,9mm pour former des ouvertures traversantes locales,
- assemblage du vitrage feuilleté, avec des ouvertures débouchantes plus grandes que la taille des diodes de préférence plus grandes d'au plus 1mm, mieux 0,5mm ou même d'au plus 0,2mm ou 0,1mm, l'éventuelle deuxième feuille étant entre la face arrière de la carte PCB et la face F2 du pare-brise ou entre la face arrière de la carte PCB et la face F3 de la lunette arrière ou de la vitre latérale.

Le placement des diodes sur la face avant peut être manuel ou robotisé (plus précis).

On peut choisir un PVB classique comme le RC41 de Solutia ou d'Eastman.La carte PCB avec les diodes peut être positionnée par rapport au vitrage (côté face arrière de la face PCB) et contraindre la mise en place de l'intercalaire de feuilletage trouée avec de préférence une découpe de l'intercalaire de feuilletage avec excès sur le contour du vitrage (et découpe de l'excédent après mise en place du vitrage côté face avant), ou encore la carte PCB avec les diodes peut être positionnée par rapport à l'intercalaire de feuilletage trouée et est contrainte par la mise en place de ce dernier et avec de préférence avec une découpe de de l'intercalaire de feuilletage à la forme exacte du vitrage feuilleté.

Dans la présente description le terme vitrage latéral ou vitre latérale désigne la même chose.

La présente invention est à présent expliquée plus en détail en référence aux figures annexées dans lesquelles :

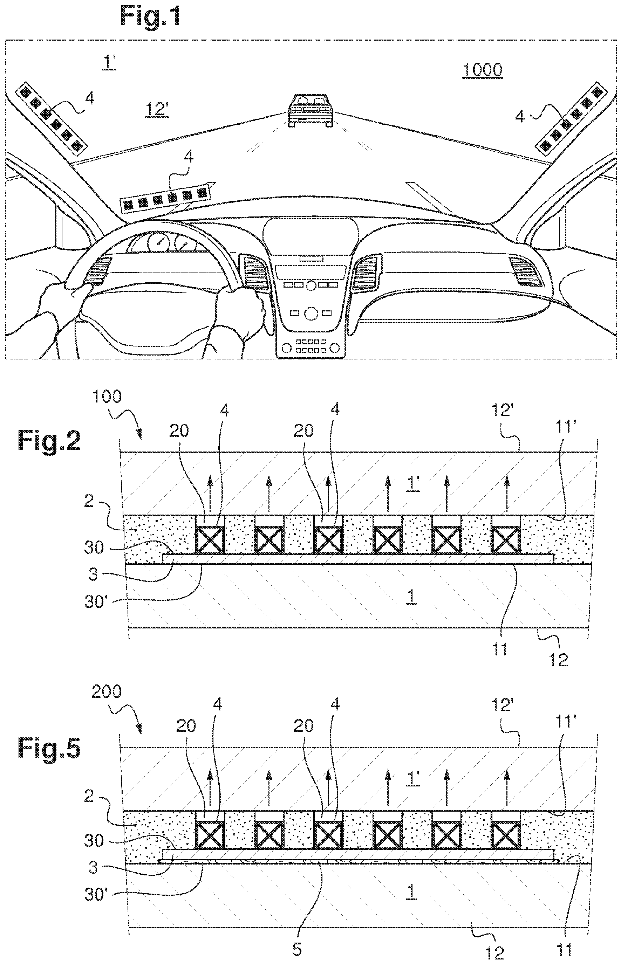

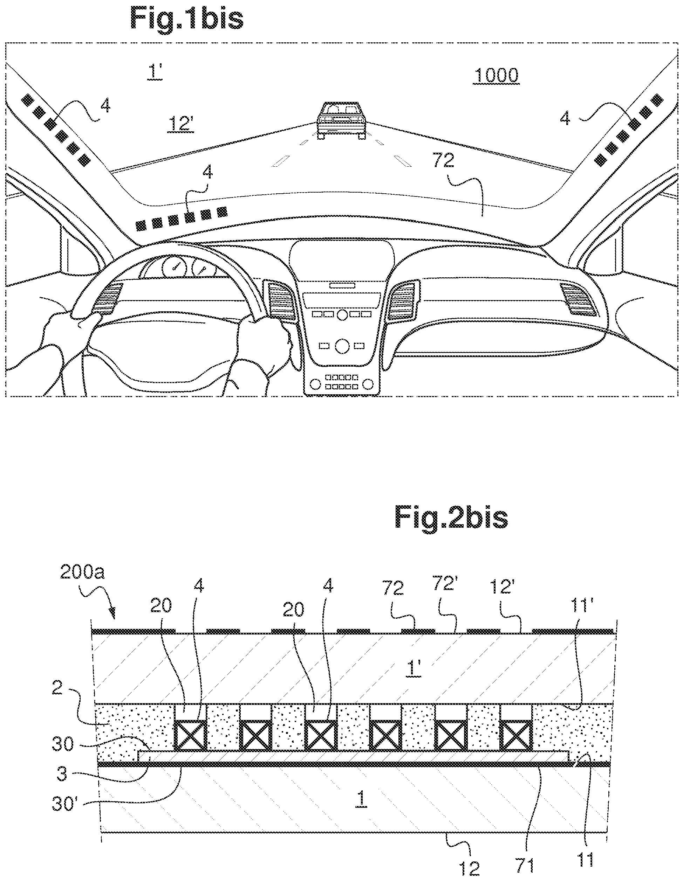

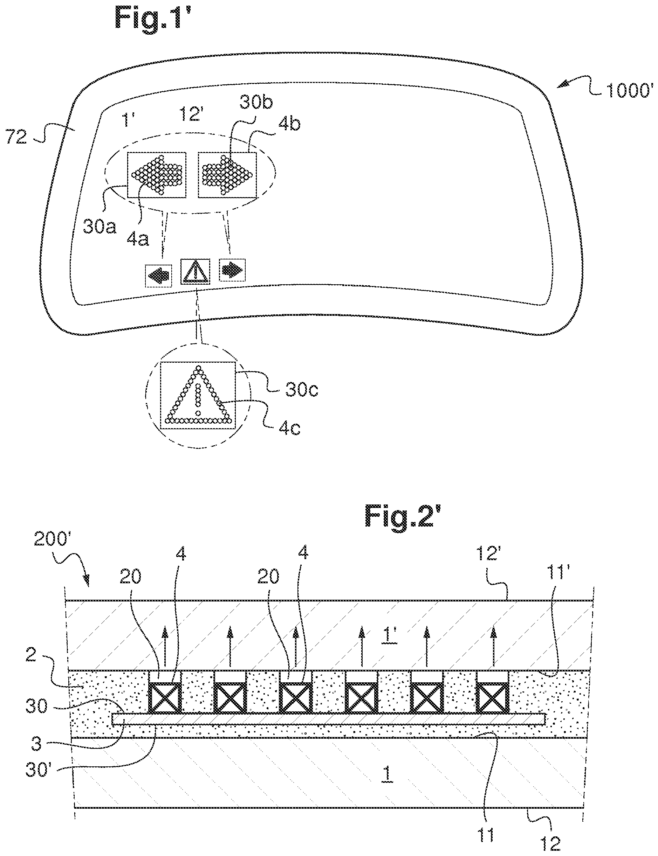

La figure 1 montre un pare-brise d'un véhicule automobile sur une route, pare-brise avec de la signalisation lumineuse selon l'invention.
La figure 1' montre un autre pare-brise d'un véhicule automobile sur une route, pare-brise avec de la signalisation lumineuse selon l'invention.
La figure 1bis montre un autre pare-brise d'un véhicule automobile sur une route, pare-brise avec de la signalisation lumineuse selon l'invention.La figure 2 est une vue schématique de coupe transversale d'un pare-brise à signalisation lumineuse dans un premier mode de réalisation de l'invention.
La figure 2' est une vue schématique de coupe transversale d'un pare-brise à signalisation lumineuse dans une variante du premier mode de réalisation de l'invention.
La figure 2bis est une vue schématique de coupe transversale d'un pare-brise à signalisation lumineuse dans une variante du premier mode de réalisation de l'invention.

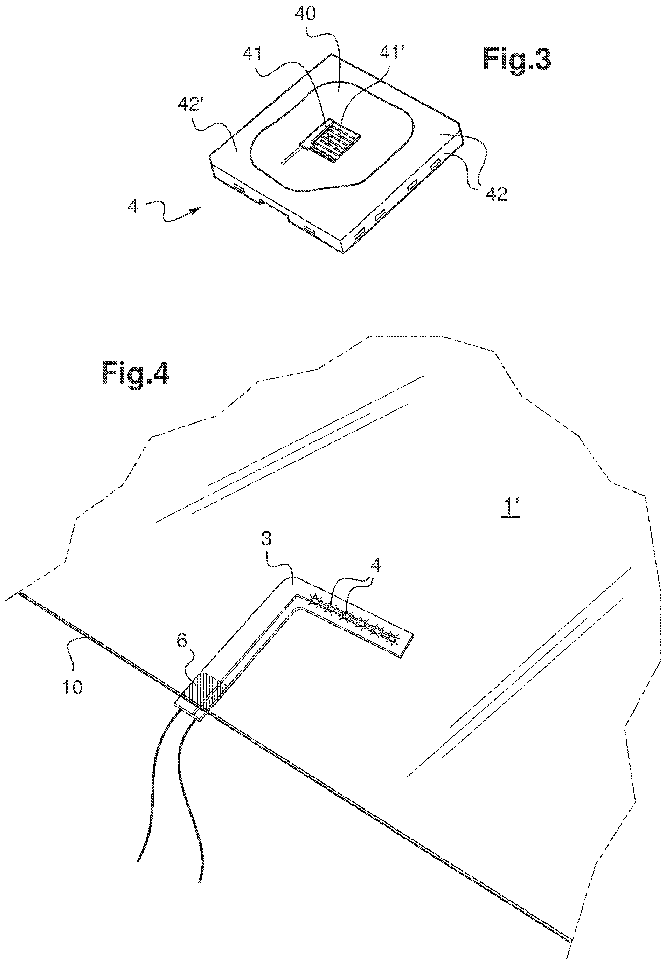

La figure 3 montre un vue en perspective d'une diode utilisée dans ce premier mode.
La figure 4 montre une vue schématique partielle de dessus du pare-brise du ce premier mode.
La figure 5 est une vue schématique de coupe transversale d'un pare-brise à signalisation lumineuse dans un deuxième mode de réalisation de l'invention.

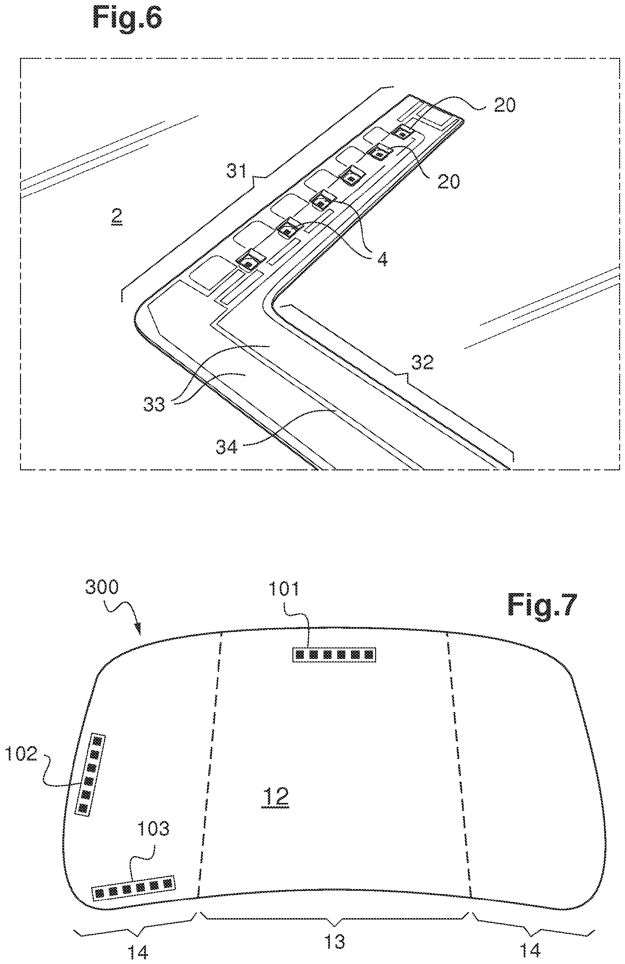

La figure 6 est une vue schématique de la fabrication du pare-brise de la figure 2.
La figure 7 est une vue schématique de face d'une lunette arrière à signalisation lumineuse dans un troisième mode de réalisation de l'invention.

La figure 1 montre (à partir de la vision de l'intérieur du véhicule) un pare-brise 1000 d'un véhicule automobile roulant sur une route à trois voies avec une voiture devant.

Le pare-brise est un vitrage feuilleté avec de la signalisation lumineuse selon l'invention
- à l'aide d'un premier ensemble de six diodes 4 sur une première carte de circuit imprimé dite carte PCB intégrée entre les deux vitrages du vitrage feuilleté, diodes en une rangée disposées dans le clair de vitre dans une zone de bord du pare-brise le long du bord longitudinal inférieur éventuellement dans ou au voisinage d'une zone périphérique de masquage (émail opaque..) du vitrage extérieur (non représenté) ou même dans une zone avec une alternance zone de masquage (couche opaque, comme un émail opaque) et zone transparente (en regard d'une diode) du vitrage extérieur et/ou intérieur,
- à l'aide d'un deuxième ensemble de six diodes 4 sur une deuxième carte de circuit imprimé dite carte PCB intégrée entre les deux vitrages du vitrage feuilleté, diodes en une rangée disposées dans le clair de vitre dans une zone de bord du pare-brise le long du bord latéral (gauche), notamment côté conducteur, éventuellement dans ou au voisinage d'une zone périphérique de masquage (émail opaque...) du vitrage extérieur ou même dans une zone avec une alternance zone de masquage (couche opaque, comme un émail opaque) et zone transparente (en regard d'une diode) du vitrage extérieur et/ou intérieur.
- à l'aide d'un troisième ensemble de six diodes 4 sur une troisième carte de circuit imprimé dite carte PCB intégrée entre les deux vitrages du vitrage feuilleté, diodes en une rangée disposées dans le clair de vitre dans une zone de bord du pare-brise le long du bord latéral droit notamment côté passager, éventuellement dans ou au voisinage d'une zone périphérique de masquage (émail opaque...) du vitrage extérieur ou même dans une zone avec une alternance zone de masquage ( couche opaque, comme un émail opaque) et zone transparente (en regard d'une diode) du vitrage extérieur et/ou intérieur

Ces diodes en particulier du premier ensemble peuvent émettre de la lumière rouge alertant le conducteur lorsque la voiture avant (ou tout autre moyen de locomotion ou encore un animal) est détectée trop proche. La lumière rouge peut être continue ou clignotante. La lumière choisie continue peut augmenter en intensité au fur et à mesure que la voiture de devant est proche ou à partir d'une distance préderterminée dite distance à fort risque. La fréquence de lumière choisie clignotante peut augmenter au fur et à mesure que la voiture de devant est proche ou à partir d'une distance prédéterminée dite distance à fort risque.

Lorsque la voiture de devant est suffisamment éloignée (respect de la distance de sécurité), les diodes sont éteintes.

Ces diodes en particulier du deuxième ensemble peuvent émettre de la lumière rouge alertant le conducteur lorsqu'une voiture (ou tout autre moyen de locomotion ou encore un animal) est détectée trop proche sur le côté gauche de la voiture. La lumière rouge peut être continue ou clignotante. La lumière choisie continue peut augmenter en intensité au fur et à mesure que la voiture sur le côté est proche ou à partir d'une distance préderterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Ces diodes en particulier du troisième ensemble peuvent émettre de la lumière rouge alertant le conducteur lorsqu'une voiture (ou tout autre moyen de locomotion ou encore un animal) est détectée trop proche sur le côté droit de la voiture. La lumière rouge peut être continue ou clignotante. La lumière choisie continue peut augmenter en intensité au fur et à mesure que la voiture sur le côté est proche ou à partir d'une distance préderterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Le système anti collision fonctionne sur n'importe quelle route : autoroute, en ville. Il peut servir aussi pour alerter de la présence trop rapprochée d'un objet ou d'un piéton.

La lumière de signalisation peut aussi passer d'une couleur (par exemple orange ou ambre) lorsque le véhicule à une distance à risque à une autre couleur par exemple rouge lorsque le véhicule à une distance plus courte encore plus dangereuse.

Dans ces cas, on prévoit autant de diodes que nécessaires par exemple une rangée avec une alternance de diodes rouges et de diodes orange ou une rangée par couleur. On peut aussi avoir au moins trois niveaux de signalisation (trois couleurs).

Le véhicule intègre au moins un capteur (de préférence un par ensemble de diodes) pour détecter ces situations dangereuses (non-respect de la distance de sécurité ou autres) et au moins une unité de commande pour piloter les diodes.

Les diodes ne sont pas nécessairement en rangée, notamment parallèle au bord du vitrage.

La ou les cartes PCB avec des diodes peuvent être de préférence dans la moitié inférieure du pare-brise ou dans le quadrant inférieur côté conducteur en particulier pour la signalisation nécessitant une action du conducteur. Etant dans le clair de vitre on préfère une carte PCB transparente.

La figure 2 est une vue schématique de coupe transversale d'un pare-brise à signalisation lumineuse dans un premier mode de réalisation de l'invention, comprenant un vitrage feuilleté 100, bombé, comportant :
- un premier vitrage 1, par exemple en verre TSA et de 2,1mm d'épaisseur, formant vitrage extérieur, avec des première et deuxième faces principales 11, 12 respectivement dites face F1 -- et face F2
- un intercalaire de feuilletage 2 en matière polymérique, ici en PVB, d'épaisseur e1 submillimétrique de préférence, par exemple un PVB (RC41 de Solutia ou d'Eastman) d'épaisseur 0,76mm ou en variante si nécessaire un PVB acoustique (tricouche ou quadricouche) par exemple d'épaisseur 0,81mm
- un deuxième vitrage 1', formant vitrage intérieur par exemple en verre TSA (ou clair ou extraclair) et de 2,1mm d'épaisseur ou même de 1,6mm, avec des troisième et quatrième faces principales 11', 12' respectivement dites face F3 et face F4, la face F3 éventuellement revêtue d'une couche fonctionnelle (chauffante, basse émissivité etc),
   la face F2 et la face F3 étant les faces internes 11, 11' du vitrage feuilleté
- un ensemble de six diodes électroluminescentes inorganiques 4, qui sont des composants montés en surface (CMS ou SMD en anglais), par exemple émettant dans le rouge sur une carte à circuit imprimé dite carte PCB 3, l'ensemble carte PCB+diodes étant d'épaisseur totale et2≤e1 et mieux avec e1-et2 d'au plus 0,5mm et de préférence de 0,1mm à 0,2mm, les diodes étant d'épaisseur e2 et la carte PCB 3 d'épaisseur e'2, avec une face dite avant 30 en regard de la face F3 et une face arrière 30' contre la face F2 ou face 11, chaque diode ayant une face émettrice émettant en direction du vitrage intérieur 1', et chaque diode ayant une tranche,

Pour chacune des diodes, l'intercalaire de feuilletage comprend une ouverture traversante 20 entourant la tranche de la diode et en contact de la tranche ou en variante espacé d'au plus 0,5mm et même d'au plus 1mm de la tranche.

L'intercalaire de feuilletage est présent entre la face F3 et la face avant de la carte PCB sur toute la face avant du PCB hors diodes, dans le vitrage feuilleté.

Les diodes (avec une seule puce semiconductrice ici) sont de forme carré de largeur de l'ordre de 5mm ou moins.

Les diodes ne doivent pas être en surépaisseur au risque de fragiliser le verre en créant des points de contraintes. Et les diodes de préférence ne doivent être trop espacées du verre au risque de créer trop de bulles d'air en particulier si l'intercalaire de feuilletage ne flue pas jusqu'à recouvrir la face avant des diodes (entourée par l'enveloppe éventuelle) et l'espace entre diodes et face F3.

On choisit une carte PCB la plus fine possible, flexible et même de préférence la plus discrète possible (largeur minimale ou même transparence) par exemple comportant un film transparent comme un PET, PEN ou un polyimide et même pour le circuit imprimé des pistes de connexion transparentes (plutôt qu'en cuivre sauf à les faire suffisamment fines).

La figure 2' est une vue schématique de coupe transversale d'un pare-brise à signalisation lumineuse dans une variante du premier mode de réalisation de l'invention. Le pare-brise 200' diffère en ce que l'intercalaire de feuilletage est aussi présent entre la face arrière de la carte PCB et la face F2, par exemple d'épaisseur plus mince que côté face avant. L'épaisseur E1 peut être inchangée ou non.

La figure 3 montre un vue en perspective d'une diode utilisée dans ce premier mode décrit en figure 2.

Chaque diode est un composant électronique 40 incluant une puce semi-conductrice 41, une face émettrice 41', et est équipée d'une enveloppe périphérique 42, typiquement polymérique ou céramique, encapsulant la tranche du composant (et définissant la tranche de la diode), débordant sur la face avant du composant en entourant la face émettrice.

Ici, la face émettrice est en retrait de la surface avant 42' de l'enveloppe qui fixe donc l'épaisseur maximale e2 de la diode 4.

L'intercalaire de feuilletage (par fluage) peut s'étendre jusqu'à être entre ladite surface avant 42' de l'enveloppe et la face F3 du pare-brise (ou d'une face F2 d'une vitre latérale ou de lunette arrière) généralement sans atteindre la face émettrice.

La face arrière 3' de la carte PCB est contre la face F2

Comme montré en figure 4, la carte PCB 3 s'étend jusqu'à la tranche 10 du vitrage feuilleté et dépasse de cette tranche. Elle est de forme coudée, en L.

Dans la zone débouchant sur la tranche, entre la face arrière 30' et la face F2 est logé un adhésif 6 étanche à l'eau liquide d'épaisseur d'au plus 0,1mm et mieux d'au plus 0,05mm, notamment un adhésif double face (de préférence transparent si dans clair de vitre).

Comme montré aussi en figure 6 concernant la fabrication de ce pare-brise, la carte PCB coudée comporte donc une première partie (rectangulaire) 31 porteuse des diodes 4 (et avec le coude) et une deuxième partie 32 pour la connectique (rectangulaire), par exemple deux pistes de cuivre 33 avec une ligne d'isolation 34 débouchant et dépassant sur la tranche du vitrage feuilleté. Cette deuxième partie peut être (beaucoup) plus longue que la première partie.

Avant l'assemblage, l'intercalaire de feuilletage 2 sous forme de préférence d'une seule feuille de PVB comporte des ouvertures traversantes 20 légèrement plus grandes que la taille des diodes de préférence plus grandes d'au plus 0,5mm (surtout si diodes montées manuellement sur PCB) ou même d'au plus 0,1mm (surtout si diodes montées automatiquement sur PCB).

La figure 1bis montre un autre pare-brise d'un véhicule automobile sur une route, pare-brise avec de la signalisation lumineuse selon l'invention. Il diffère de celui de la figure 1 par l'emplacement plus en périphérie des trois cartes PCB, qui peuvent être opaques (support opaque et/ou pistes (fils etc) conductrices opaques). Comme montré en figure 2bis, la face F2 comporte un cadre plein de masquage 71 en émail noir de préférence et la face F4 (ou F3) un cadre 72 de masquage en émail noir de préférence, avec des ouvertures 7' au droit des diodes.

La figure 1' montre un autre pare-brise d'un véhicule automobile, pare-brise 1000' avec de la signalisation lumineuse selon l'invention. Il diffère de celui de la figure 1 par le type de signalisation et par l'emplacement des deuxième et troisième cartes PCB.

Le premier ensemble de diodes 4c, sur un support 30C, forme un triangle avec si possible un point d'exclamation central. Il forme donc un signal de danger

Les deuxième et troisième ensemble de diodes 4a et 4b, sur leur support 30a et 30b, forme des flèches indiquant que le clignotant est enclenché.

Dans un deuxième mode de réalisation, montré en figure 5, le pare-brise 200 diffère en ce que la face arrière 30' est collée à la face F2 par un adhésif double face 5, de préférence transparent, d'épaisseur e3 tq e3+e'2 d'au plus 0,15mm mieux 0,1mm notamment e3<0,05mm, collage sur toute la longueur (et la largeur) de la carte PCB ou au moins dans la zone avec les diodes.

La figure 7 est une vue schématique de face (côté face F1 ou face 12) d'une lunette arrière à signalisation lumineuse 300 dans un troisième mode de réalisation de l'invention.

Dans la zone centrale 13, on forme un troisième feu stop 101 avec par exemple six diodes rouges sur la carte PCB le long du bord longitudinal supérieur.

Dans chaque zone latérale 14, on forme un clignotant 102 avec par exemple six diodes émettant dans le jaune sur la carte PCB le long du bord latéral en jeu, ou encore un feu de signalisation 103 avec par exemple six diodes sur la carte PCB le long du bord longitudinal inférieur en jeu.

On peut reprendre le vitrage feuilleté décrit en figure 2 en inversant la position du PCB : sa face arrière est contre la face F3.

Alternativement, on forme un répétiteur de clignotant sur un vitrage latéral de la même façon.

## Revendications

1. Vitrage de signalisation lumineuse de véhicule formant pare-brise de véhicule (1000, 1000') comprenant :
- un vitrage feuilleté (100, 200, 200a, 200') comportant :
- un premier vitrage (1'), formant vitrage extérieur, avec des première et deuxième faces principales (11', 12') respectivement dites face F1 et face F2
- un intercalaire de feuilletage (2) en matière polymérique d'épaisseur e1 d'au plus 1,8mm
- un deuxième vitrage (1), formant vitrage intérieur, avec des troisième et quatrième faces principales (11, 12) respectivement dites face F3 et face F4 la face F2 et la face F3 étant les faces internes du vitrage feuilleté
- un ensemble de diodes électroluminescentes inorganiques (4) sur une face dite avant (30), en regard de la face F3, d'une carte à circuit imprimé dite carte PCB (3), l'ensemble carte PCB et diodes étant d'épaisseur totale et2, les diodes étant d'épaisseur e2 et la carte PCB étant d'épaisseur e'2,
chaque diode ayant une face émettrice (41) apte à émettre en direction du vitrage intérieur, et chaque diode ayant une tranche, les diodes étant aptes à émettre une lumière de signalisation
l'intercalaire de feuilletage ayant une ouverture traversante (20)
**caractérisé en ce que** pour chacune des diodes, l'intercalaire de feuilletage comprend une ouverture traversante (20) entourant la tranche de la diode et **en ce que** l'intercalaire de feuilletage est en outre entre la face F3 et la face avant de la carte PCB et **en ce que** et2≤e1.

2. Vitrage de signalisation lumineuse de véhicule choisi parmi une lunette arrière (2000) et une vitre latérale, comprenant :
- un vitrage feuilleté (300) comportant :
- un premier vitrage, formant vitrage extérieur, avec des première et deuxième faces principales (12) respectivement dites face F1 et face F2,
- un intercalaire de feuilletage en matière polymérique d'épaisseur e1 d'au plus 1,8mm,
- un deuxième vitrage 1', formant vitrage intérieur, avec des troisième et quatrième faces principales respectivement dites face F3 et face F4
la face F2 et la face F3 étant les faces internes du vitrage feuilleté
- un ensemble de diodes électroluminescentes inorganiques (4) sur une face dite avant, en regard de la face F2, d'une carte à circuit imprimé dite carte PCB , l'ensemble carte PCB et diodes étant d'épaisseur totale et2, les diodes étant d'épaisseur e2 et la carte PCB étant d'épaisseur e'2,
- chaque diode ayant une face émettrice apte à émettre en direction du vitrage extérieur, et chaque diode ayant une tranche, les diodes étant aptes à émettre une lumière de signalisation,
l'intercalaire de feuilletage ayant une ouverture traversante
**caractérisé en ce que** pour chacune des diodes, l'intercalaire de feuilletage comprend une ouverture traversante (20) entourant la tranche de la diode, **en ce que** l'intercalaire de feuilletage est en outre entre la face F2 et la face avant de la carte PCB et **en ce que** et2≤e1.

3. Vitrage de signalisation lumineuse de véhicule selon l'une des revendications précédentes **caractérisé en ce que** l'intercalaire de feuilletage (2) est espacé d'au plus 0,5mm mieux d'au plus 0,1mm de la tranche des diodes (4) et même est en contact avec la tranche des diodes.

4. Vitrage de signalisation lumineuse de véhicule selon l'une des revendications précédentes **caractérisé en ce que** e1 est subcentimétrique et de préférence e1-et 2<0,5mm et même de préférence e1-et2 allant de 0,1 à 0,3mm.

5. Vitrage de signalisation lumineuse de véhicule selon l'une des revendications précédentes **caractérisé en ce que** chaque diode étant un composant électronique (40) incluant une puce semi-conductrice (41), et est équipée d'une enveloppe périphérique (42), notamment polymérique ou céramique, encapsulant la tranche du composant électronique, notamment enveloppe définissant la tranche de la diode, débordant sur la face avant du composant en entourant la puce semi-conductrice, l'intercalaire de feuilletage s'étend jusqu'à être entre ladite surface avant (42') de l'enveloppe et la face F3 du pare-brise ou la face F2 de la vitre latérale ou de la lunette arrière.

6. Vitrage de signalisation lumineuse de véhicule selon la revendication précédente **caractérisé en ce que** l'intercalaire de feuilletage (2) s'étend jusqu'à être entre ladite surface avant (42') de l'enveloppe et la face F3 du pare-brise ou la face F2 de la vitre latérale ou de la lunette arrière sans être en contact avec la face émettrice.

7. Vitrage de signalisation lumineuse de véhicule selon l'une des revendications précédentes **caractérisé en ce que** l'intercalaire de feuilletage (2) est en PVB avec e1 allant de 0,7 à 0,9mm, les diodes (4) sont des composants montés en surface sur la face avant de la carte PCB, e'2 est d'au plus 0,15mm.

8. Vitrage de signalisation lumineuse de véhicule selon l'une quelconque des revendications précédentes **caractérisé en ce que** la carte PCB (3) est collée ou plaquée contre la face F2 pour le pare-brise ou la face F3 pour la lunette arrière ou le vitrage latéral, collage par un adhésif (6) d'épaisseur e3≤0,1mm, mieux e3≤0,05mm, et de préférence avec e3+et2≤e1.

9. Vitrage de signalisation lumineuse (200') de véhicule selon l'une des revendications 1 à 7 **caractérisé en ce que** l'intercalaire de feuilletage est également entre la face arrière de la carte PCB et la face F2 du pare-brise ou **en ce que** l'intercalaire de feuilletage est également entre la face arrière de la carte PCB et la face F3 de la lunette arrière ou de la vitre latérale.

10. Vitrage de signalisation lumineuse de véhicule selon l'une quelconque des revendications précédentes **caractérisé en ce que** les diodes (4) sont des diodes de puissances qui sont en fonctionnement sous alimentées électriquement en courant, de préférence avec un facteur d'au moins 10 et même d'au moins 20, notamment de façon à maintenir une température inférieure à la température de ramollissement du matériau polymérique de l'intercalaire de feuilletage (2), en particulier d'au plus 130°C, mieux d'au plus 120°C et même d'au plus 100°C.

11. Vitrage de signalisation lumineuse de véhicule selon l'une quelconque des revendications précédentes **caractérisé en ce que** la carte PCB (4) comporte un film en matière plastique, de préférence en poly(éthylène téréphtalate) ou en polyimide, pourvue de pistes conductrices de préférence transparentes et est équipée des diodes montées en surface.

12. Vitrage de signalisation lumineuse (200a) de véhicule selon l'une quelconque des revendications précédentes **caractérisé en ce que** la carte PCB est disposée dans une région du pare-brise dans laquelle le verre extérieur est opaque par une couche opaque notamment en émail de préférence en F2 et/ou dans laquelle le verre intérieur est opaque par une couche opaque notamment en émail de préférence en F4 et comportant alors au moins des ouvertures au droit des diodes ou **en ce que** la carte PCB est disposée dans une région de la lunette arrière ou de la vitre latérale dans laquelle le verre intérieur est opaque par une couche opaque notamment en émail de préférence en F4 et/ou dans laquelle le verre extérieur est opaque par une couche opaque notamment en émail de préférence en F2 et comportant alors au moins des ouvertures au droit des diodes.

13. Vitrage de signalisation lumineuse de véhicule selon l'une quelconque des revendications précédentes **caractérisé en ce que** le pare-brise comporte sur la face F3 ou la face F4 en regard des diodes une couche diffusante, éventuellement formant un pictogramme, de préférence blanche, de préférence un émail ou **en ce que** le vitrage latéral ou la lunette arrière comporte en regard des diodes une couche diffusante de préférence sur la face F2, de préférence blanche en particulier un émail, éventuellement formant une signalétique dont un pictogramme.

14. Vitrage de signalisation lumineuse de véhicule selon l'une des revendications précédentes **caractérisé en ce que** la carte PCB (4) s'étend au moins jusqu'à la tranche (10) du vitrage feuilleté, de préférence est en forme coudée et même mieux en L, et entre la face arrière (30') de la carte PCB et la face F2 du pare-brise ou la face F3 de la lunette arrière ou de la vitre latérale, est logé un adhésif étanche à l'eau liquide (6) d'épaisseur d'au plus 0,1mm et mieux d'au plus 0,05mm, notamment un adhésif double face.

15. Véhicule comportant au moins un vitrage de signalisation lumineuse selon l'une quelconque des revendications précédentes **caractérisé en ce que** le vitrage de signalisation lumineuse formant pare-brise est un moyen anti collision ou le vitrage de signalisation lumineuse formant la lunette arrière est un vitrage incluant un feu stop, un troisième feu stop, le vitrage de signalisation lumineuse formant vitrage latérale est un vitrage incluant un feu de détresse ou un feu de repérage du véhicule un répétiteur de clignotant.

16. Procédé de fabrication du vitrage de signalisation lumineuse selon l'une des revendications 1 à 14 **caractérisé en ce qu'**il comporte les étapes suivantes:
découpe automatique de l'intercalaire de feuilletage sous forme d'une unique feuille d'au plus 0,9mm pour former des ouvertures traversantes locales ou l'intercalaire de feuilletage comportant une première feuille et une deuxième feuille, découpe automatique de la première feuille d'au plus 0,9mm pour former des ouvertures traversantes locales,
assemblage du vitrage feuilleté, avec des ouvertures traversantes plus grandes que la taille des diodes de préférence plus grandes d'au plus 0,5mm ou même d'au plus 0,1mm l'éventuelle deuxième feuille étant entre la face arrière de la carte PCB et la face F2 du pare-brise ou entre la face arrière de la carte PCB et la face F3 de la lunette arrière ou de la vitre latérale .

## Patentansprüche

1. Fahrzeugverglasung mit Leuchtanzeige, die eine Fahrzeugwindschutzscheibe (1000, 1000') bildet, umfassend:
- eine Verbundverglasung (100, 200, 200a, 200'), einschließlich:
- einer ersten Verglasung (1'), die eine Außenverglasung bildet, mit ersten und zweiten Hauptflächen (11', 12'), die jeweils als Fläche F1 und Fläche F2 bezeichnet werden
- einer Verbundzwischenschicht (2) aus polymerem Material mit einer Dicke e1 von nicht mehr als 1,8 mm
- einer zweiten Verglasung (1), welche die Innenverglasung bildet, mit dritten und vierten Hauptflächen (11, 12), die jeweils als Fläche F3 und Fläche F4 bezeichnet werden
wobei die Fläche F2 und die Fläche F3 die Innenflächen der Verbundverglasung sind
- einer Anordnung von anorganischen Leuchtdioden (4) auf einer der Fläche F3 gegenüberliegenden sogenannten vorderen Fläche (30), einer Leiterplatte, die PCB-Platte (3) genannt wird, wobei die PCB-Platten- und Diodenanordnung eine Gesamtdicke et2 aufweist, wobei die Dioden eine Dicke e2 aufweisen und wobei die PCB-Platte eine Dicke e'2 aufweist,
wobei jede Diode eine emittierende Fläche (41) aufweist, die in Richtung der Innenverglasung emittieren kann, und jede Diode eine Kante aufweist, wobei die Dioden in der Lage sind, ein Signallicht zu emittieren
wobei die Verbundzwischenschicht eine Durchgangsöffnung (20) aufweist
**dadurch gekennzeichnet, dass** für jede der Dioden die Verbundzwischenschicht eine Durchgangsöffnung (20) umfasst, welche die Kante der Diode umgibt, und dass die Verbundzwischenschicht ferner zwischen der Fläche F3 und der vorderen Fläche der PCB-Platte liegt und dass et2≤e1 ist.

2. Fahrzeugverglasung mit Leuchtanzeige, die aus einer Heckscheibe (2000) und einer Seitenscheibe ausgewählt ist, umfassend:
- eine Verbundverglasung (300), einschließlich:
- einer ersten Verglasung, die eine Außenverglasung bildet, mit ersten und zweiten Hauptflächen (12), die jeweils als Fläche F1 und Fläche F2 bezeichnet werden,
- einer Verbundzwischenschicht aus polymerem Material mit einer Dicke e1 von nicht mehr als 1,8 mm,
- einer zweiten Verglasung 1', welche die Innenverglasung bildet, mit dritten und vierten Hauptflächen, die jeweils als Fläche F3 und Fläche F4 bezeichnet werden
wobei die Fläche F2 und die Fläche F3 die Innenflächen der Verbundverglasung sind
- einer Anordnung von anorganischen Leuchtdioden (4) auf einer der Fläche F2 gegenüberliegenden sogenannten vorderen Fläche, einer Leiterplatte, die PCB-Platte genannt wird, wobei die PCB-Platten- und Dioden-Anordnung eine Gesamtdicke et2 aufweist, wobei die Dioden eine Dicke e2 aufweisen und wobei die PCB-Platte eine Dicke e'2 aufweist,
- wobei jede Diode eine emittierende Fläche aufweist, die in Richtung der Außenverglasung emittieren kann, und jede Diode eine Kante aufweist, wobei die Dioden in der Lage sind, ein Signallicht zu emittieren,
wobei die Verbundzwischenschicht eine Durchgangsöffnung aufweist
**dadurch gekennzeichnet, dass** für jede der Dioden die Verbundzwischenschicht eine Durchgangsöffnung (20) umfasst, welche die Kante der Diode umgibt, dass die Verbundzwischenschicht ferner zwischen der Fläche F2 und der vorderen Fläche der PCB-Platte liegt und dass et2≤e1 ist.

3. Fahrzeugverglasung mit Leuchtanzeige nach einem der vorstehenden Ansprüche, **dadurch gekennzeichnet, dass** die Verbundzwischenschicht (2) um nicht mehr als 0,5 mm, besser um nicht mehr als 0,1 mm von der Kante der Dioden (4) beabstandet ist und sogar mit der Kante der Dioden in Kontakt ist.

4. Fahrzeugverglasung mit Leuchtanzeige nach einem der vorstehenden Ansprüche, **dadurch gekennzeichnet, dass** e1 subzentimetrisch ist und vorzugsweise e1-et 2<0,5 mm und sogar vorzugsweise e1-et2 im Bereich von 0,1 bis 0,3 mm liegt.

5. Fahrzeugverglasung mit Leuchtanzeige nach einem der vorstehenden Ansprüche, **dadurch gekennzeichnet, dass** jede Diode ein elektronisches Bauteil (40) ist, das einen Halbleiterchip (41) einschließt, und mit einer peripheren Umhüllung (42), insbesondere aus Polymer oder Keramik, ausgestattet ist, welche die Kante des elektronischen Bauteils einkapselt, insbesondere einer Umhüllung, welche die Kante der Diode definiert und auf der vorderen Fläche des Bauteils hervorsteht, während sie den Halbleiterchip umgibt, die Verbundzwischenschicht erstreckt sich, bis sie zwischen der vorderen Oberfläche (42') der Umhüllung und der Fläche F3 der Windschutzscheibe oder der Fläche F2 der Seitenscheibe oder der Heckscheibe liegt.

6. Fahrzeugverglasung mit Leuchtanzeige nach einem der vorstehenden Ansprüche, **dadurch gekennzeichnet, dass** sich die Verbundzwischenschicht (2) erstreckt, bis sie zwischen der vorderen Oberfläche (42') der Umhüllung und der Fläche F3 der Windschutzscheibe oder der Fläche F2 der Seitenscheibe oder der Heckscheibe liegt, ohne mit der emittierenden Fläche in Kontakt zu sein.

7. Fahrzeugverglasung mit Leuchtanzeige nach einem der vorstehenden Ansprüche, **dadurch gekennzeichnet, dass** die Verbundzwischenschicht (2) aus PVB mit e1 im Bereich von 0,7 bis 0,9 mm besteht, die Dioden (4) oberflächenmontierte Bauteile auf der vorderen Fläche der PCB-Platte sind, e'2 nicht mehr als 0,15 mm beträgt.

8. Fahrzeugverglasung mit Leuchtanzeige nach einem der vorstehenden Ansprüche, **dadurch gekennzeichnet, dass** die PCB-Platte (3) gegen die Fläche F2 für die Windschutzscheibe oder die Fläche F3 für die Heckscheibe oder die Seitenverglasung geklebt oder plattiert ist, verklebt mit einem Klebstoff (6) mit einer Dicke e3≤0,1 mm, besser e3≤0,05 mm, vorzugsweise mit e3+et2≤e1.

9. Fahrzeugverglasung mit Leuchtanzeige (200') nach einem der Ansprüche 1 bis 7, **dadurch gekennzeichnet, dass** die Verbundzwischenschicht auch zwischen der hinteren Fläche der PCB-Platte und der Fläche F2 der Windschutzscheibe liegt, oder dass die Verbundzwischenschicht auch zwischen der hinteren Fläche der PCB-Platte und der Fläche F3 der Heckscheibe oder der Seitenscheibe liegt.

10. Fahrzeugverglasung mit Leuchtanzeige nach einem der vorstehenden Ansprüche, **dadurch gekennzeichnet, dass** die Dioden (4) Leistungsdioden sind, die unter elektrischer Stromzufuhr in Betrieb sind, vorzugsweise mit einem Faktor von mindestens 10 und sogar mindestens 20, insbesondere derart, dass eine Temperatur unterhalb der Erweichungstemperatur des polymeren Materials der Verbundzwischenschicht (2), insbesondere von nicht mehr als 130 °C, besser von nicht mehr als 120 °C und sogar von nicht mehr als 100 °C gehalten wird.

11. Fahrzeugverglasung mit Leuchtanzeige nach einem der vorstehenden Ansprüche, **dadurch gekennzeichnet, dass** die PCB-Platte (4) eine Folie aus Kunststoff, vorzugsweise aus Poly(ethylenterephthalat) oder aus Polyimid, enthält, die mit vorzugsweise transparenten Leiterbahnen versehen und mit oberflächenmontierten Dioden ausgestattet ist.

12. Fahrzeugverglasung mit Leuchtanzeige (200a) nach einem der vorstehenden Ansprüche, **dadurch gekennzeichnet, dass** die PCB-Platte in einem Bereich der Windschutzscheibe angeordnet ist, in dem das äußere Glas durch eine opake Schicht, insbesondere aus Emaille, vorzugsweise aus F2, opak ist und/oder in dem das innere Glas durch eine opake Schicht, insbesondere aus Emaille, vorzugsweise aus F4, opak ist und somit mindestens Öffnungen auf Höhe der Dioden aufweist, oder dass die PCB-Platte in einem Bereich der Heckscheibe oder der Seitenscheibe angeordnet ist, in dem das innere Glas durch eine opake Schicht, insbesondere aus Emaille, vorzugsweise aus F4, opak ist, und/oder in dem das äußere Glas durch eine opake Schicht, insbesondere aus Emaille, vorzugsweise aus F2, opak ist, und somit mindestens Öffnungen auf Höhe der Dioden aufweist.

13. Fahrzeugverglasung mit Leuchtanzeige nach einem der vorstehenden Ansprüche, **dadurch gekennzeichnet, dass** die Windschutzscheibe auf der den Dioden zugewandten Fläche F3 oder der Fläche F4 eine Streuschicht, die gegebenenfalls ein Piktogramm bildet, vorzugsweise weiß, vorzugsweise eine Emaille, aufweist, oder dass die Seitenverglasung oder die Heckscheibe eine den Dioden zugewandte Streuschicht, vorzugsweise auf der Fläche F2, vorzugsweise weiß, insbesondere eine Emaille, die gegebenenfalls eine Beschilderung, einschließlich eines Piktogramms, bildet, aufweist.

14. Fahrzeugverglasung mit Leuchtanzeige nach einem der vorstehenden Ansprüche, **dadurch gekennzeichnet, dass** die PCB-Platte (4) sich mindestens bis zur Kante (10) der Verbundverglasung erstreckt, vorzugsweise abgewinkelt und noch bevorzugter L-förmig ist, und zwischen der hinteren Fläche (30') der PCB-Platte und der Fläche F2 der Windschutzscheibe oder der Fläche F3 der Heckscheibe oder der Seitenscheibe ein flüssiger wasserfester Klebstoff (6) mit einer Dicke von nicht mehr als 0,1 mm und besser von nicht mehr als 0,05 mm, insbesondere ein doppelseitiger Klebstoff, untergebracht ist.

15. Fahrzeug, das mindestens eine Verglasung mit Leuchtanzeige nach einem der vorstehenden Ansprüche umfasst, **dadurch gekennzeichnet, dass** die Verglasung mit Leuchtanzeige, welche die Windschutzscheibe bildet, ein Kollisionsvermeidungsmittel ist, oder die Verglasung mit Leuchtanzeige, welche die Heckscheibe bildet, eine Verglasung ist, die eine Bremsleuchte, eine dritte Bremsleuchte einschließt, wobei die Verglasung mit Leuchtanzeige, welche die Seitenscheibe bildet, eine Verglasung ist, die ein Warnblinklicht oder ein Positionslicht des Fahrzeugs oder eine Zusatzblinkleuchte einschließt.

16. Verfahren zur Herstellung einer Verglasung mit Leuchtanzeige nach einem der Ansprüche 1 bis 14, **dadurch gekennzeichnet, dass** es die folgenden Schritte aufweist:
- automatisches Schneiden der Verbundzwischenschicht in Form einer einzelnen Scheibe von nicht mehr als 0,9 mm zur Bildung von lokalen Durchgangsöffnungen oder der Verbundzwischenschicht, die eine erste Scheibe und eine zweite Scheibe aufweist, wobei die erste Scheibe von nicht mehr als 0,9 mm zur Bildung von lokalen Durchgangsöffnungen automatisch geschnitten wird,
- Zusammenbauen der Verbundverglasung, mit Durchgangsöffnungen, die größer sind als die Größe der Dioden, vorzugsweise größer um nicht mehr als 0,5 mm oder sogar um nicht mehr als 0,1 mm, wobei sich die zweite Scheibe, falls vorhanden, zwischen der hinteren Fläche der PCB-Platte und der Fläche F2 der Windschutzscheibe oder zwischen der hinteren Fläche der PCB-Platte und der Fläche F3 der Heckscheibe oder der Seitenscheibe befindet.

## Claims

1. A vehicle luminous signaling glazing unit forming a vehicle front windshield (1000, 1000') comprising:
- a laminated glazing unit (100, 200, 200a, 200') including:
- a first glazing pane (1'), forming the exterior glazing pane, with first and second main faces (11', 12') respectively called face F1 and face F2;
- a lamination interlayer (2) made of a polymeric material of thickness e1 of at most 1.8 mm; and
- a second glazing pane (1), forming the interior glazing pane, with third and fourth main faces (11, 12) respectively called face F3 and face F4,
the face F2 and the face F3 being the internal faces of the laminated glazing unit; and
- a set of inorganic light-emitting diodes (4) on a face called the front face (30), facing the face F3, of a PCB printed circuit board (3), the PCB board and diodes assembly being of total thickness et2, the diodes being of thickness e2 and the PCB board being of thickness e'2,
each diode having an emitting face (41) able to emit in the direction of the interior glazing pane, and each diode having an edge face, the diodes being able to emit signaling light, the lamination interlayer having a through-aperture (20),
**characterized in that** for each of the diodes, the lamination interlayer comprises a through-aperture (20) encircling the edge face of the diode and **in that** the lamination interlayer is furthermore between the face F3 and the front face of the PCB board and **in that** et2≤e1.

2. A vehicle signaling glazing unit, chosen from a rear windshield (2000) and a side window, comprising:
- a laminated glazing unit (300) including:
- a first glazing pane, forming the exterior glazing pane, with first and second main faces (12) respectively called face F1 and face F2;
- a lamination interlayer made of a polymeric material of thickness e1 of at most 1.8 mm; and
- a second glazing pane 1', forming the interior glazing pane, with third and fourth main faces respectively called face F3 and face F4,
the face F2 and the face F3 being the internal faces of the laminated glazing unit; and
- a set of inorganic light-emitting diodes (4) on a face called the front face, facing the face F2, of a PCB printed circuit board, the PCB board and diodes assembly being of total thickness et2, the diodes being of thickness e2 and the PCB board being of thickness e'2,
each diode having an emitting face able to emit in the direction of the exterior glazing pane, and each diode having an edge face, the diodes being able to emit signaling light, the lamination interlayer having a through-aperture,
**characterized in that** for each of the diodes, the lamination interlayer comprises a through-aperture (20) encircling the edge face of the diode, **in that** the lamination interlayer is furthermore between the face F2 and the front face of the PCB board and **in that** et2≤e1.

3. The vehicle luminous signaling glazing unit as claimed in one of the preceding claims, **characterized in that** the lamination interlayer (2) is spaced apart by at most 0.5 mm and better still at most 0.1 mm from the edge face of the diodes (4) and even makes contact with the edge face of the diodes.

4. The vehicle luminous signaling glazing unit as claimed in one of the preceding claims, **characterized in that** e1 is subcentimeter-sized and preferably e1-et2<0.5 mm and even preferably e1-et2 ranging from 0.1 to 0.3 mm.

5. The vehicle luminous signaling glazing unit as claimed in one of the preceding claims, **characterized in that** each diode is an electronic component (40) including a semiconductor chip (41), and is equipped with a peripheral package (42), especially a polymeric or ceramic package, encapsulating the edge face of the electronic component, said package especially defining the edge face of the diode, projecting over the front face of the component and encircling the semiconductor chip, the lamination interlayer extends as far as to be between said front surface (42') of the package and the face F3 of the front windshield or the face F2 of the side window or the rear windshield.

6. The vehicle luminous signaling glazing unit as claimed in the preceding claim, **characterized in that** the lamination interlayer (2) extends as far as to be between said front surface (42') of the package and the face F3 of the front windshield or the face F2 of the side window or the rear windshield without making contact with the emitting face.

7. The vehicle luminous signaling glazing unit as claimed in one of the preceding claims, **characterized in that** the lamination interlayer (2) is made of PVB with e1 ranging from 0.7 to 0.9 mm, the diodes (4) are components surface mounted on the front face of the PCB board, e'2 being at most 0.15 mm.

8. The vehicle luminous signaling glazing unit as claimed in any one of the preceding claims, **characterized in that** the PCB board (3) is adhesively bonded or pressed against the face F2 for the front windshield or the face F3 for the rear windshield or side window, adhesive bonding by an adhesive (6) of thickness e3:50.1 mm, better still e3≤0.05 mm, and preferably with e3+et2≤e1.

9. The vehicle luminous signaling glazing unit (200') as claimed in one of claims 1 to 7, **characterized in that** the lamination interlayer is also between the back face of the PCB board and the face F2 of the front windshield or **in that** the lamination interlayer is also between the back face of the PCB board and the face F3 of the rear windshield or side window.

10. The vehicle luminous signaling glazing unit as claimed in any one of the preceding claims, **characterized in that** the diodes (4) are power diodes that in operation are under supplied electrically with current, preferably with a factor of at least 10 and even of at least 20, especially so as to maintain a temperature below the softening temperature of the polymeric material of the lamination interlayer (2), in particular at most 130°C, better still at most 120°C and even at most 100°C.

11. The vehicle luminous signaling glazing unit as claimed in any one of the preceding claims, **characterized in that** the PCB board (4) includes a plastic film, preferably made of polyethylene terephthalate or polyimide, provided with preferably transparent conductive tracks and is equipped with surface mount diodes.

12. The vehicle luminous signaling glazing unit (200a) as claimed in any one of the preceding claims, **characterized in that** the PCB board is placed in a region of the front windshield, region in which the exterior glass is rendered opaque by an opaque layer especially made of enamel preferably on F2 and/or in which the interior glass is rendered opaque by an opaque layer especially made of enamel preferably on F4 and then including apertures at least in line with the diodes or **in that** the PCB board is placed in a region of the rear windshield or the side window, region in which the interior glass is rendered opaque by an opaque layer especially made of enamel preferably on F4 and/or in which the exterior glass is rendered opaque by an opaque layer especially made of enamel preferably on F2 and then including apertures at least in line with the diodes.

13. The vehicle luminous signaling glazing unit as claimed in any one of the preceding claims, **characterized in that** the front windshield includes on the face F3 or the face F4 facing the diodes a preferably white scattering layer, optionally forming a pictogram, preferably an enamel, or **in that** the side window or rear windshield includes facing the diodes a preferably white scattering layer preferably on the face F2, in particular an enamel, optionally forming a sign such as a pictogram.

14. The vehicle luminous signaling glazing unit as claimed in one of the preceding claims, **characterized in that** the PCB board (4) extends at least as far as to the edge face (10) of the laminated glazing unit, preferably has a bent shape and better still an L-shape, and between the back face (30') of the PCB board and the face F2 of the front windshield or the face F3 of the rear windshield or the side window, is housed an adhesive (6) that is tight to liquid water and of thickness of at most 0.1 mm and better still at most 0.05 mm, especially a double-sided adhesive.

15. A vehicle including at least one luminous signaling glazing unit as claimed in any one of the preceding claims, **characterized in that** the luminous signaling glazing unit forms a front windshield and is an anti-collision means or the luminous signaling glazing unit forms the rear windshield and is a glazing unit including a stop light or a third stop light, or the luminous signaling glazing unit forms a side window and is a glazing unit including a hazard warning light or a light for locating the vehicle or a side repeater.

16. A process for manufacturing the luminous signaling glazing unit as claimed in one of claims 1 to 14, **characterized in that** it includes the following steps:
automatically cutting a lamination interlayer taking the form of a single sheet of at most 0.9 mm thickness to form local through-apertures or, the lamination interlayer including a first sheet and a second sheet, automatically cutting the first sheet of at most 0.9 mm thickness to form local through-apertures; and
assembling the laminated glazing unit, with through-apertures larger than the size of the diodes, preferably larger by at most 0.5 mm or even at most 0.1 mm, the optional second sheet being between the back face of the PCB board and the face F2 of the front windshield or between the back face of the PCB board and the face F3 of the rear windshield or side window.
